# EUROPEAN PATENT SPECIFICATION

(11) **EP 4 539 944 B1**
(45) Date of publication and mention of the grant of the patent: **05.08.2026**
(21) Application number: 23734214.2
(22) Date of filing: 20.06.2023
(51) Int. Cl.: A62B 18/08, B29C 45/00, B29C 45/14, B29C 45/16

(54) **METHOD OF MANUFACTURING A FULL-FACE MASK FOR AN AIR PURIFYING RESPIRATOR AND SUCH A MASK**
VERFAHREN ZUR HERSTELLUNG EINER GANZGESICHTSMASKE FÜR EIN LUFTREINIGENDES BEATMUNGSGERÄT UND EINE SOLCHE MASKE
PROCÉDÉ DE FABRICATION D'UN MASQUE INTÉGRAL POUR UN APPAREIL DE PROTECTION RESPIRATOIRE À ÉPURATION D'AIR ET UN TEL MASQUE

(30) Priority: 20.06.2022 SE 2250751
(43) Date of publication of application: 23.04.2025
(73) Proprietor: TIKI Safety AB, 197 40 Bro (SE)
(72) Inventor: KLOCKSETH, Mikael, 167 43 Bromma (SE)
(74) Representative: Kransell & Wennborg KB
(86) International application number: PCT/EP2023/066612
(87) International publication number: WO 2023/247520

(56) References cited:
- BR-U2- MU8 800 128
- CN-U- 213 029 836
- FR-A1- 2 618 340
- HR-A2- P 960 569
- US-A- 4 352 353
- US-A1- 2013 139 824
- US-A1- 2015 297 854

## Description

### TECHNICAL FIELD

The present disclosure relates generally to APRs (Air Purifying Respirators) and PAPRs (Powered Air Purifying Respirators) and more specifically to a method of manufacturing a full-face mask for an APR or PAPR. A full-face mask for an APR or PAPR is also disclosed.

### BACKGROUND

Air-purifying respirators are air filtering devices that protect against inhalation of both large and small particles by removing contaminants by filtration or absorption. They may be passive, APR, or powered, PAPR. The PAPRs have a great advantage over APRs, because they only require a simple fit test, and they do not increase the work of breathing. PAPRs also reduces the risk of leakage into the mask caused by growth of beard, wrinkles etc since they provide a positive pressure inside the face mask.

Important aspects when using APRs and PAPRs are that they provide a wide and undistorted field of view and that they are light and comfortable to wear. APRs and PAPRs may be used in many different environments, for many different purposes and at many different applications. Such different conditions of use require that the full-face mask exhibits corresponding different properties. E.g. the materials forming the full-face mask should exhibit different properties if the APR/PAPR is intended to be used at different surrounding temperatures, such as at firefighting, indoors at room temperature or outdoor at cold or arctic temperatures. At some applications the materials need to sustain aggressive surrounding atmospheres. Additionally, some applications may require that the visor of the full-face mask exhibits certain material-depending properties, such that sun screening, anti-reflex or scratch protective properties. For these reasons there exists a need of providing a method of manufacturing a full-face mask which allows for that the materials used for forming the full-face mask may be freely selected.

WO 2011/159233 A1 discloses a full-face mask for a PAPR. The full-face mask is manufactured in one piece from a transparent plastic in a one-step vacuum forming process with a single curved field of vision. A face sealing may be manufactured as a separate piece by vacuum forming and cutting out a central opening adapted to the full-face mask. The face sealing is then bonded to the full-face mask. Alternatively, the face sealing may be formed integral with the full-face mask in the one-step vacuum forming process. FR 2 618 340 A1, disclosing a method of manufacturing a full-face mask for an APR or a PAPR, represents the closest prior art.

### SUMMARY

An object of the disclosure is to provide an enhanced method of manufacturing a full-face mask for an APR or PAPR.

Another object is to provide such a method which allows a great freedom in selecting the materials comprised in the full-face mask.

A further object is to provide such a method by which the full-face mask may be manufactured at low cost.

Still another object is to provide an such a method which allows manufacturing at high speed.

Yet another object is to provide an enhanced full-face mask for an APR or PAPR.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

The invention is defined by the independent claim 1.

The method thus provides for that a full-face mask comprising a visor and a frame surrounding the visor may readily be manufactured at high speeds and low cost while still allowing that the visor and the frame may be formed of a great variety of different material using the same manufacturing line.

The visor may be formed into the three-dimensional shape in a separate bending or thermoforming operation before being inserted into the first mould for injection moulding the frame onto the perimeter of the visor.

However, at preferred embodiments, the step of forming the visor into a three-dimensional shape is performed in the first mould by applying heat to the visor and closing the first mould. Hence, at such embodiments the planar visor being cut out from the first sheet material is placed in the first mould and thereafter formed into the three-dimensional shape inside the mould before the injection moulding of the frame onto the visor. By this means the separate operation of forming the three-dimensional visor is eliminated.

The method may further comprise the step of forming a face sealing rim around the frame by injection moulding of a third material onto the perimeter of the frame.

The step of forming the face sealing rim may be performed in a second mould being different from the first mould.

The steps of forming the frame and the face sealing rim may be performed in one and the same injection moulding machine by 2K injection moulding or Multi Material Moulding.

The step of forming a frame around the visor may comprise fusing or adhering the second material to the first material. Such fusion or adhering of the frame to the visor may preferably be preformed when the visor and the frame comprise the same or chemically fusible or adherable materials.

Alternatively or in combination, the step of forming a frame around the visor may comprise forming a mechanical engagement between the frame and the visor. Such mechanical engagement between the frame and the visor may be performed where the frame and the visor comprise non-fusible or non-adherable materials and/or where a particularly strong mutual fixation of the two components is desired.

The step of forming a face sealing rim around the frame may comprise fusing or adhering the third material to the second material.

Alternatively or in combination, the step of forming a face sealing rim around the frame may comprise forming a mechanical engagement between the sealing rim and the frame. Such mechanical engagement between the face sealing rim and the frame may be performed where the face sealing rim and the frame comprise non-fusible or non-adherable materials and/or where a particularly strong mutual fixation of the two components is desired.

The first material may comprise PETG or PC.

The second material may be selected from the group of PETG, PC, PA, PP, ABS and TPE.

Both the first and second material may comprise PETG or PC. By forming the visor and the frame of the same material mutual fixation of the two components by fusion or adhering is facilitated.

The third material may be selected from the group of TPE, silicone and rubber.

The method may further comprise the step of coating at least one side of the visor by a layer of a fourth material. The fourth material may e.g. be a material exhibiting sun screening, anti-reflex and/or scratch protective properties.

The step of coating the visor by a layer of a fourth material may preferably be performed before the step of forming the frame around the visor such as before the step of forming the visor into a three-dimensional shape.

According to a second aspect, the present disclosure provides a full-face mask for an APR (air Purifying Respirator) or PAPR (Powered Air Purifying Respirator) as defined in independent claim 15. The full-face mask comprises; a visor comprising a cut out piece of a transparent polymeric first sheet material which has been formed into a three-dimensional geometry, and a frame formed of a second material which has been injection moulded onto the perimeter of the visor.
The full-face mask may further comprise a face sealing rim which has been injection moulded onto the perimeter of the frame.

Further objects and advantages of the method and the full-face mask appear from the following description of embodiments and from the appended claims.

### BRIEF DESCRIPTION OF THE DRAWINGS

Aspects and embodiments are now described, by way of example, with reference to the accompanying drawings, in which:
Fig. 1a is a perspective view of a full-face mask for a PAPR according to an embodiment.
Fig. 1b is an exploded perspective view of the full-face mask shown in fig. 1.
Figs. 2a-c are schematic illustrations of respective steps at an embodiment of the method of manufacturing a full-face mask.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

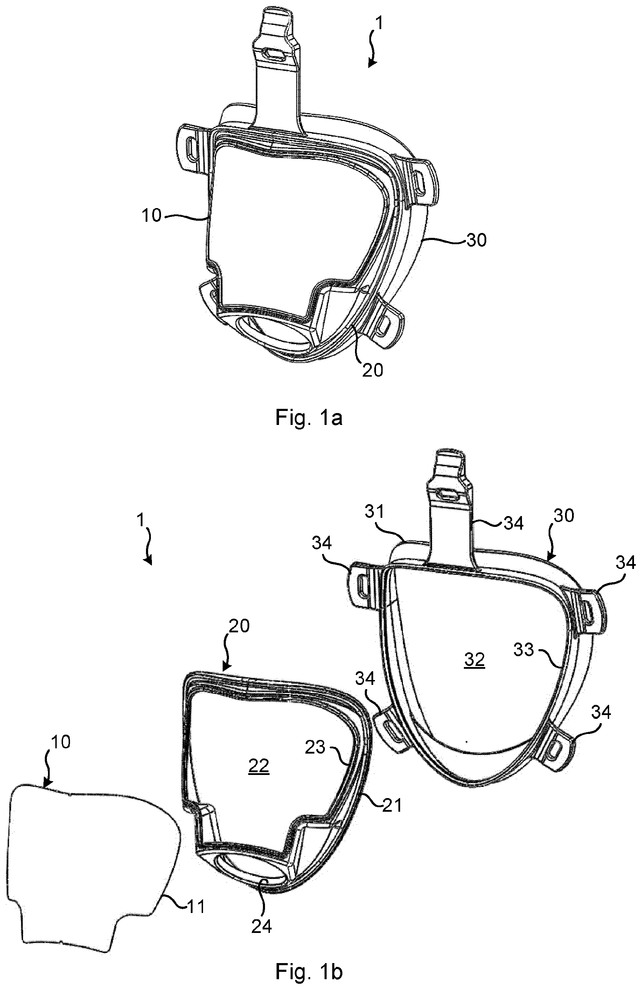

Figs. 1a and b show an embodiment of a full-face mask 1 for an APR or PAPR. The full-face mask 1 has been manufactured by a method of manufacturing as described below. The full-face mask 1 comprises a visor 10, a frame 20 and a face sealing rim 30. In use, the APR or PAPR comprises additional components which are not shown in the figures. Such components may comprise at least one filter unit, a blower or fan for providing a positive pressure in the mask, a power source, a valve arrangement and a harness for holding the mask such that it covers the face of the wearer. Such components and their function are well known in the art and are not described further here.

The visor 10 is formed from a sheet of a transparent polymer material. Examples of materials for forming the visor are PETG (Polyethylene terephthalate glycol) and PC (Polycarbonate). However, other sheet formed transparent polymer materials having ocular clarity which are bendable or thermoformable into a three-dimensional shape may also be used for forming the visor. The visor has a three-dimensional shape with an outer perimeter 11.

The frame 20 is formed of an injection mouldable polymer material. Examples of such materials are PETG, PA, PC (Polycarbonate), PP (Polypropylene), ABS (Acrylonitrile butadiene styrene) and TPE (Thermoplastic elastomers). The frame 20 has a three-dimensional shape with an outer perimeter 21 and a central through opening 22 surrounded by an edge 23. The visor 10 is received in the central opening 22 and the perimeter 11 of the visor is sealingly fixed along the edge 23 of the frame.

In cases where the visor 10 and the frame 20 comprise mutually fusible and/or adherable materials, e.g. when the visor 10 and the frame 20 both comprise PETG or PC, the mutual fixation of the two components may be accomplished by material fusion and/or adhering. In other cases or in addition the visor 10 and the frame may be mutually fixed by mechanical engagement means. Such engagement means may e.g. comprise a U-shaped channel (not shown) which extends along the inner edge 23 of the frame 20 and which snugly receives the outer perimeter 11 of the visor 10. Such engagement means may alternatively or in combination comprise mutually cooperating recesses and protrusions arranged along the perimeter 11 of the visor 10 and the inner edge 23 of the frame 20.

Both when the mutual fixation between the visor 10 and the frame 20 is realized by fusion, adhering and mechanical engagement means, the mutual fixation between the two components is accomplished during the first injection moulding operation when the frame 20 is injection moulded to the perimeter 11 of the visor 10.

The frame 20 also comprises a second opening 24 for the arrangement of a valve arrangement and a filter unit (not shown) which are not described further in detail here. Such additional components are normally attached to the full-face mask 1 after the completion of the mask 1 comprising the visor 10, the frame 20 and the face sealing rim 30.

The face sealing rim 30 is arranged to sealingly contact the face of the wearer to thereby seal the interior of the mask 1 from the surrounding atmosphere at use. The face sealing rim 30 is formed of an injection mouldable flexible polymer material. Examples of such materials suitable for the face sealing rim are TPE, silicone and rubber. The face sealing rim 30 has a three-dimensional shape with an outer perimeter 31 arranged to sealingly contact the face of the wearer and a central through opening 32 surrounded by an edge 33. The the frame 20 is received in the central opening 32 and the perimeter 21 of the frame is sealingly fixed along the edge 33 of the face sealing rim 30.

In cases where the frame 20 and the face sealing rim 30 comprise mutually fusible and/or adherable materials, e.g. when the frame 20 and the face sealing rim 30 both comprise TPE, the mutual fixation of the two components may be accomplished by material fusion and/or adhering. In other cases or in addition the frame 20 and the face sealing rim 30 may be mutually fixed by mechanical engagement means. Such engagement means may e.g. comprise a U-shaped channel (not shown) which extends along the inner edge 33 of the face sealing rim and which snugly receives the outer perimeter 21 of the frame 20. Such engagement means may alternatively or in combination comprise mutually cooperating recesses and protrusions arranged along the perimeter 21 of the frame 20 and the inner edge 33 of the face sealing rim 30.

The face sealing rim 30 also comprises a number of outwardly protruding flexible tabs 34 which are arranged for the fixation of a harness (not shown) for holding the full-face mask 1 to the head of the wearer.

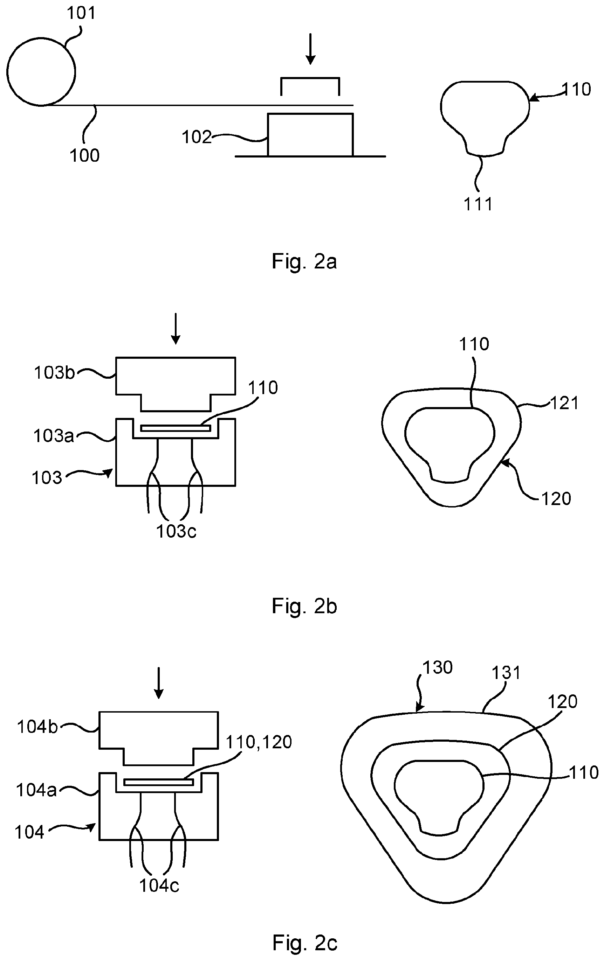

Figs. 2a-c schematically illustrates an embodiment of the method of manufacturing a full-face mask for an APR or a PAPR.

Fig. 2a illustrates a first step where a sheet 100 of a transparent polymeric first material is provided on a roll 101 and fed to a punching machine 102 for punching out a visor 110 from the sheet 100. At some embodiments a rolling mill (not shown) may be arranged between the material roll 101 and the punching machine 102 for relaxation of the material and for enhancing the planarity of the sheet 100. After being punched out from the sheet 100 the visor has an essentially planar, two-dimensional shape with an outer perimeter 111.

Fig. 2b illustrates a second and a third step of the method. The planar visor 110 is positioned in the mould 103 of a first injection moulding machine. The mould 103 comprises two mould halves 103a, 103b and channels 103c for providing the injection mouldable material into the mould cavity.

After positioning the planar visor 110 into the mould 103, the mould is closed. By closing the mould 103, the planar visor is reshaped from a two-dimensional to a three-dimensional shape corresponding to the interior shape of the mould 103. During this reshaping of the visor, heat may be applied to the mould 103 and thereby to the visor 110 such that the visor is reshaped by thermoforming.

In the next step, the second material is injected into the interior of the mould 103 through the channels 103c. The interior shape of the mould is arranged such that the injected material makes contact with the outer perimeter 111 of the visor 110 and forms a frame 120 having a three-dimensional shape with an outer perimeter 121 around the visor 110.

Fig 2c illustrates a further step of the method. The three-dimensional aggregate visor 110 and frame 120 is positioned in the mould 104 of a second injection moulding machine. The mould 104 comprises two mould halves 104a, 104b and channels 104c for providing the injection mouldable material into the mould cavity.

After positioning the aggregate visor 110 and frame 120 into the mould 104, the mould is closed. A third material is then injected into the interior of the mould 104 through the channels 104c. The interior shape of the mould is arranged such that the injected material makes contact with the outer perimeter 121 of the frame 120 and forms a face sealing rim 130 having a three-dimensional shape with an outer perimeter 131 around the aggregate visor 110 and frame 120.

At a non-shown alternative embodiment of the method, the planar visor 110 is reshaped into the three-dimensional shape at a separate bending or thermoforming operation after the punching operation shown in fig. 2a and before being positioned in the mould 103 for injection moulding the frame 120 onto the perimeter 111 of the visor 110.

At another non-shown embodiment both injection moulding operations are preformed in one and the same injection moulding machine. This may be accomplished by a so called 2K injection moulding operation or Multi Material Moulding (MMM) operation. At such operations one of the mould halves is rotatable and comprises two mould cavities. The planar visor may be positioned in a first cavity and the mould is thereafter closed to reshape the visor into the three-dimensional shape. Thereafter the second material is injected to form the frame around the visor. When the frame has hardened the mould is opened and the rotatable half is rotated such that closing the two mould halves now defines a mould cavity for forming the face sealing rim around the frame. Thereafter the third material is injected into the mould cavity whereby the face sealing rim is formed onto the perimeter of the frame.

At a further non-shown embodiment, the planar visor is reshaped into the three-dimensional shape in a separate bending or thermoforming operation whereafter the frame and the face sealing rim are consecutively formed by a 2K injection moulding or a MMM operation.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

## Claims

1. Method of manufacturing a full-face mask (1) for an APR (air purifying Respirator) or a PAPR (Powered Air Purifying Respirator), which method comprises the steps of;
- providing a sheet (100) of a transparent polymeric first material,
- cutting out a visor (10, 110) from said sheet,
- forming the visor (10, 110) into a three-dimensional shape in a first mould (103) by applying heat to the visor (10, 110) and closing the first mould (103),
- forming a frame (20, 120) around the visor (10, 110) by injection moulding a second material onto a perimeter (11, 111) of the visor in said first mould (103).

2. Method according to claim 1, further comprising the step of;
- forming a face sealing rim (30, 130) around the frame (20, 120) by injection moulding of a third material onto a perimeter (21, 121) of the frame (20, 120).

3. Method according to claim 2, wherein the step of forming the face sealing rim (30, 130) is performed in a second mould (104) being different from the first mould (103).

4. Method according to claim 2, wherein the steps of forming the frame and the face sealing rim are performed in one and the same injection moulding machine by 2K injection moulding or Multi Material Moulding.

5. Method according to any of claims 1-4, wherein the step of forming a frame (20, 120) around the visor (10, 110) comprises fusing or adhering the second material to the first material.

6. Method according to any of claims 1-5, wherein the step of forming a frame (20, 120) around the visor (10, 110) comprises forming a mechanical engagement between the frame (20, 120) and the visor (10, 110).

7. Method according to any of claims 2-6, wherein the step of forming a face sealing rim (30, 130) around the frame (20, 120) comprises fusing or adhering the third material to the second material.

8. Method according to any of claims 2-7, wherein the step of forming a face sealing rim (30, 130) around the frame (20, 120) comprises forming a mechanical engagement between the face sealing rim (30, 120) and the frame (20, 120).

9. Method according to any of claims 1-8, wherein the first material comprises PETG or PC.

10. Method according to any of claims 1-9, wherein the second material is selected from the group of PETG, PC, PA, PP, ABS and TPE.

11. Method according to any of claims 1-10, wherein both the first and second material comprises the same polymer material, preferably PETG or PC.

12. Method according to any of claims 1-11, wherein the third material is selected from the group of TPE, silicone and rubber.

13. Method according to any of claims 1-12, comprising the step of coating at least one side of the visor by a layer of a fourth material.

## Patentansprüche

1. Verfahren zur Herstellung einer Ganzgesichtsmaske (1) für ein APR (Luftreinigungsgerät) oder ein PAPR (Luftreinigungsgerät mit Gebläse), wobei das Verfahren die folgenden Schritte umfasst:
- Vorsehen einer Lage (100) eines ersten transparenten Polymermaterials,
- Ausschneiden eines Visiers (10, 110) aus der Lage,
- Formen des Visiers (10, 110) in eine dreidimensionale Form in einer ersten Gießform (103) durch Aufbringen von Wärme auf das Visier (10, 110) und Schließen der ersten Gießform (103),
- Bilden eines Rahmens (20, 120) um das Visier (10, 110) durch Aufspritzen eines zweiten Materials auf einen Umfang (11, 111) des Visiers in der ersten Gießform (103).

2. Verfahren nach Anspruch 1, weiterhin umfassend den folgenden Schritt:
- Bilden einer Gesichtsabdichtkante (30, 130) um den Rahmen (20, 120) durch Aufspritzen eines dritten Materials auf einen Umfang (21, 121) des Rahmens (20, 120).

3. Verfahren nach Anspruch 2, wobei der Schritt des Bildens der Gesichtsabdichtkante (30, 130) in einer zweiten Gießform (104) ausgeführt wird, die von der ersten Gießform (103) verschieden ist.

4. Verfahren nach Anspruch 2, wobei die Schritte des Bildens des Rahmens und der Gesichtsabdichtkante in ein und derselben Spritzmaschine durch 2K-Spritzguss oder Multimaterial-Spritzguss ausgeführt werden.

5. Verfahren nach einem der Ansprüche 1 bis 4, wobei der Schritt des Bildens eines Rahmens (20, 120) um das Visier (10, 110) das Schmelzen oder Ankleben des zweiten Materials an dem erstem Material umfasst.

6. Verfahren nach einem der Ansprüche 1 bis 5, wobei der Schritt des Bildens eines Rahmens (20, 120) um das Visier (10, 110) das Bilden einer mechanischen Verbindung zwischen dem Rahmen (20, 120) und dem Visier (10, 110) umfasst.

7. Verfahren nach einem der Ansprüche 2 bis 6, wobei der Schritt des Bildens einer Gesichtsabdichtkante (30, 130) um den Rahmen (20, 120) das Schmelzen oder Ankleben des dritten Materials an dem zweiten Material umfasst.

8. Verfahren nach einem der Ansprüche 2 bis 7, wobei der Schritt des Bildens einer Gesichtsabdichtkante (30, 130) um den Rahmen (20, 120) das Bilden einer mechanischen Verbindung zwischen der Gesichtsabdichtkante (30, 120) und dem Rahmen (20, 120) umfasst.

9. Verfahren nach einem der Ansprüche 1 bis 8, wobei das erste Material PETG oder PC umfasst.

10. Verfahren nach einem der Ansprüche 1 bis 9, wobei das zweite Material aus der Gruppe von PETG, PC, PA, PP, ABS und TPE ausgewählt wird.

11. Verfahren nach einem der Ansprüche 1 bis 10, wobei sowohl das erste als auch das zweite Material das gleiche Polymermaterial umfasst, bevorzugt PETG oder PC.

12. Verfahren nach einem der Ansprüche 1 bis 11, wobei das dritte Material aus der Gruppe von TPE, Silicon und Gummi ausgewählt wird.

13. Verfahren nach einem der Ansprüche 1 bis 12, umfassend den Schritt des Beschichtens zumindest einer Seite des Visiers mit einer Lage eines vierten Materials.

## Revendications

1. Procédé de fabrication d'un masque facial intégral (1) pour un APR (appareil de protection respiratoire à épuration d'air) ou un PAPR (appareil de protection respiratoire à épuration d'air motorisé), lequel procédé comprend les étapes de :
- fournir un film (100) d'un premier matériau polymère transparent,
- découper une visière (10, 110) dans ledit film,
- former la visière (10, 110) en une forme tridimensionnelle dans un premier moule (103) en appliquant de la chaleur sur la visière (10, 110) et en fermant le premier moule (103),
- former un cadre (20, 120) autour de la visière (10, 110) par moulage par injection d'un deuxième matériau sur un périmètre (11, 111) du viseur dans ledit premier moule (103).

2. Procédé selon la revendication 1, comprenant en outre les étapes de :
- former un bord de scellement facial (30, 130) autour du cadre (20, 120) par moulage par injection d'un troisième matériau sur un périmètre (21, 121) du cadre (20,120).

3. Procédé selon la revendication 2, dans lequel l'étape de former le bord de scellement facial (30, 130) est exécutée dans un second moule (104) différent du premier moule (103).

4. Procédé selon la revendication 2, dans lequel les étapes de formation du cadre et du bord de scellement facial sont exécutées dans une même et unique machine de moulage par injection par un moulage par injection 2k ou un moulage multi-matériaux.

5. Procédé selon l'une quelconque des revendications 1-4, dans lequel l'étape de formation d'un cadre (20, 120) autour de la visière (10, 110) comprend la fusion ou le collage du deuxième matériau au premier matériau.

6. Procédé selon l'une quelconque des revendications 1-5, dans lequel l'étape de formation d'un cadre (20, 120) autour de la visière (10, 110) comprend la formation d'un engagement mécanique entre le cadre (20, 120) et la visière (10, 110).

7. Procédé selon l'une quelconque des revendications 2-6, dans lequel l'étape de formation d'un bord de scellement facial (30, 130) autour du cadre (20, 120) comprend la fusion ou le collage du troisième matériau au deuxième matériau.

8. Procédé selon l'une quelconque des revendications 2-7, dans lequel l'étape de formation d'un bord de scellement facial (30, 130) autour du cadre (20, 120) comprend la formation d'un engagement mécanique entre le bord de scellement facial (30, 130) et le cadre (20, 120).

9. Procédé selon l'une quelconque des revendications 1-8, dans lequel le premier matériau comprend du PETG ou du PC.

10. Procédé selon l'une quelconque des revendications 1-9, dans lequel le deuxième matériau est sélectionné parmi le groupe PETC, PC, PA, PP, ABS et TPE.

11. Procédé selon l'une quelconque des revendications 1-10, dans lequel à la fois le premier et le deuxième matériau comprennent le même matériau polymère, de préférence du PETG ou du PC.

12. Procédé selon l'une quelconque des revendications 1-11, dans lequel le troisième matériau est sélectionné parmi le groupe TPE, silicone et caoutchouc.

13. Procédé selon l'une quelconque des revendications 1-12, comprenant l'étape de revêtir au moins un côté de la visière par une couche d'un quatrième matériau.
